# FASCICULE DE BREVET EUROPEEN

(11) **EP 2 538 638 B1**
(45) Date de publication et mention de la délivrance du brevet: **20.11.2019**
(21) Numéro de dépôt: 12173225.9
(22) Date de dépôt: 22.06.2012
(51) Int. Cl.: H04L 29/08

(54) **PROCÉDÉ DE GESTION DE FOURNITURE DE SERVICES**
VERFAHREN ZUM VERWALTEN DER DIENSTLEISTUNG
METHOD FOR MANAGING SERVICE PROVIDING

(30) Priorité: 24.06.2011 FR 1155612
(43) Date de publication de la demande: 26.12.2012
(73) Titulaire: Orange, 75015 Paris (FR)
(72) Inventeur: Guelec, Stéphane, 22300 Lannion (FR); Balcerek, Adrien, 59390 Lys Lez Lannoy (FR); Picaud, Yvan, 22300 Lannion (FR)

(56) Documents cités:
- EP-A1- 0 948 225
- US-A1- 2004 043 763
- US-A1- 2008 040 488
- US-A1- 2008 141 303

## Description

L'invention concerne un procédé et un dispositif de gestion de fourniture de services, un serveur de fourniture de services, un procédé et un dispositif de déclaration de traitement, un procédé et un dispositif de déclaration d'équipements et un équipement de communication. Notamment, l'invention concerne les serveurs de fournitures de services tels que des magasins d'applications pour équipements de communications tels que des terminaux mobiles mais aussi des équipement de communications domestiques tels que la passerelle domestique, des capteurs domestiques de surveillance et/ou d'assistance, des décodeurs vidéo, télévision, etc.

Les magasins d'application mettent à disposition des utilisateurs une liste d'applications estampillés compatible avec le terminal qui en fait la reproduction. Pour cela, l'utilisateur connecte son terminal à un serveur de fourniture de services en utilisant une interface IHM sur le terminal après création d'un compte utilisateur et authentification. Ensuite, l'utilisateur choisit, grâce à l'IHM, l'application souhaitée dans une liste organisée en différentes catégories d'applications, et demande au moyen de cette IHM l'installation automatique par le serveur de fourniture de services de l'application choisie sur son terminal. Le serveur de fourniture de services télécharge et installe alors l'application sur le terminal.

Ces magasins d'applications fonctionne de manière verticale : Cela signifie que le catalogue d'applications proposé est uniquement accessible par des terminaux compatibles avec les applications proposées, et que les applications sont uniquement téléchargeables et exécutables sur ces terminaux compatibles. Plus précisément, un téléchargement d'une application s'effectuera uniquement sur un terminal demandeur. L'avantage de magasins d'applications verticaux est que l'utilisateur n'a pas à vérifier la compatibilité de sont terminal avec l'application choisie.

Pour proposer ce type de magasins d'applications, le fournisseur de services doit mettre à disposition des fabricants d'application un kit de développement afin que les développeurs d'applications puissent élaborer des applications compatibles avec les terminaux visés par ce fournisseur de services. Donc, pour un même traitement, le fabricant de moyens de traitement devra élaborer autant de moyens de traitement différents que de terminaux distincts visés.

Le fournisseur de services propose ensuite un magasin d'applications directement accessible par les terminaux utilisateurs compatibles. Au serveur de fourniture de services sera couplés un serveur d'authentification adapté mettant en œuvre l'identification et l'authentification des utilisateurs demandant une connexion au serveur de fourniture de services et, le cas échéant, un serveur de facturation.

A ce jour, l'essentiel des magasins d'applications visent le marché de la téléphonie mobile. Peu de serveurs de fourniture de services ne proposent de tels magasins d'applications pour le marché des équipements multimédia domestiques (tels que la télévision, décodeur, etc.) en raison notamment de la complexité des équipements domestiques comparativement au téléphone mobile. En effet, ces équipements multimédia domestiques mettent en œuvre un réseau domestique sur lequel des équipements variés sont connectés : télévision connectés, lecteur multimédia DLNA, serveur de contenus (NAS, DLNA, Camera IP, etc. En outre, ce réseau est opéré par une passerelle domestique qui fait office de routeur d'accès à Internet et aussi passerelle protocolaire vers d'autres réseaux tels que les réseaux Zigbee, mBus, etc.

Dans la demande de brevet US20080141303 est proposée la délivrance d'un même contenu sous plusieurs formats distincts à différents équipements d'un réseau local. Cette délivrance peut être adaptée aux équipements du réseau local en fonction d'une sélection par l'utilisateur des formats les mieux adaptés à plusieurs de ses équipements. Cela suppose une connaissance de l'utilisateur des formats adaptés à ses équipements.

Un des buts de la présente invention est d'apporter des améliorations par rapport à l'état de la technique.

Un objet de l'invention est un procédé de gestion de fourniture de services par un serveur de fourniture de services à un premier équipement de communication de traitements adaptés à un ou plusieurs deuxièmes équipements de communication appartenant au même réseau local que ledit premier équipement de communication, lesdits un ou plusieurs deuxièmes équipements de communication étant distincts dudit premier équipement de communication, comportant, lors d'une connexion dudit premier équipement de communication audit serveur de fourniture de services,
- une réception de données d'équipements relatives à au moins un des deuxièmes équipements, les données d'équipements étant transmises par le premier équipement au serveur de fourniture de services suite à une découverte d'équipements de communication dudit réseau local détectant un ou plusieurs deuxièmes équipements de communication connectés audit réseau local, lesdites données équipements comportent desdits données reçues par ledit premier équipement de communication desdits un ou plusieurs deuxièmes équipements de communication lors de ladite découverte, et
- une extraction parmi plusieurs traitements disponibles sur ledit serveur de fourniture de services en fonction de données complémentaires associées auxdits traitements et des capacités desdits un ou plusieurs deuxièmes équipements de communication, les capacités étant issues des données équipements, les traitements extraits étant adaptés pour être sélectionné par ledit premier équipement de communication, suite à cette sélection, délivré par ledit serveur de fourniture de services audit au moins un desdits un ou plusieurs deuxième équipements de communication et mis en œuvre par au moins un desdits un ou plusieurs deuxièmes équipements de communication.

Ainsi, le serveur de fourniture de services proposera non pas un magasin d'applications vertical, c'est-à-dire des applications compatibles uniquement avec le terminal de l'utilisateur connecté au serveur de fourniture de services, mais des applications ou traitements adaptés pour être mis en œuvre par un ou plusieurs équipements de communication appartenant au même réseau local que le terminal de l'utilisateur. Ainsi, l'utilisateur pourra connecter notamment sa télévision au serveur de fourniture de services pour télécharger des applications pour son téléphone mobile et/ou fixe, et/ou des applications domotiques utilisant plusieurs équipements tels que caméra IP, centrale domotiques, etc.

Avantageusement, le procédé de gestion de fourniture de services comporte une analyse de données équipements fournissant lesdites capacités desdits un ou plusieurs deuxièmes équipements de communication en fonction desdites données équipements transmises par ledit premier équipement de communication audit serveur de fourniture de services.

Ainsi, le serveur de fourniture de services peut tenir compte de toutes les évolutions du réseau local, ajout d'un équipement, changement des capacités d'un équipement (ajout de mémoire, etc.) sans déclaration préalable de l'utilisateur. Le serveur de fourniture de services propose donc un magasin d'application dynamique en fonction du réseau local auquel appartient l'équipement de communication de l'utilisateur connecté audit serveur de fourniture de services.

Avantageusement, le procédé de gestion de fourniture de services comporte une fourniture d'au moins un troisième équipement de communication en fonction de données complémentaires associées au traitement dont ledit équipement de communication requiert une fourniture et des capacités desdits un ou plusieurs deuxièmes équipements de communication.

Ainsi, le procédé de gestion adapte le réseau local pour permettre et/ou optimiser la mise en œuvre d'un trainement proposé par le serveur de fourniture de services.

Avantageusement, le procédé de gestion de fourniture de services déclenche la fourniture dudit traitement requis lorsque ledit procédé de gestion de fourniture de services reçoit dudit premier équipement de communication des données équipements transmises audit premier équipement de communication par un troisième équipement de communication fournis audit réseau local lors d'une découverte d'équipements mise en œuvre par ledit premier équipement de communication.

Ainsi, le traitement proposé par le procédé de gestion de fourniture de services peut être stocké soit sur le serveur de fourniture de services soit sur un autre dispositif.

Avantageusement, selon une implémentation de l'invention, les différentes étapes du procédé selon l'invention sont mises en œuvre par un logiciel ou programme d'ordinateur, ce logiciel comprenant des instructions logicielles destinées à être exécutées par un processeur de données d'un dispositif faisant partie d'un serveur de fourniture de services et étant conçus pour commander l'exécution des différentes étapes de ce procédé.

L'invention vise donc aussi un programme comprenant des instructions de code de programme pour l'exécution des étapes du procédé de gestion de fourniture de services lorsque ledit programme est exécuté par un processeur.

Un objet de l'invention est un dispositif de gestion de la fourniture de services d'un serveur de fourniture de services à un premier équipement de communication de traitements adaptés à un ou plusieurs deuxièmes équipements de communication appartenant au même réseau local que ledit premier équipement de communication, lesdits un ou plusieurs deuxièmes équipements de communication étant distincts dudit premier équipement de communication, le dispositif de gestion de la fourniture de services comportant :
- une interface d'entrée de données d'équipements relatives à au moins un des deuxièmes équipements, les données d'équipements étant transmises par le premier équipement au serveur de fourniture de services suite à une découverte d'équipements de communication dudit réseau local détectant un ou plusieurs deuxièmes équipements de communication connectés audit réseau local, lesdites données équipements comportent desdits données reçues par ledit premier équipement de communication desdits un ou plusieurs deuxièmes équipements de communication lors de ladite découverte, et
- des moyens d'extraction, lors d'une connexion dudit premier équipement de communication audit serveur de fourniture de services, parmi plusieurs traitements disponibles sur ledit serveur de fourniture de services en fonction de données complémentaires associées auxdits traitements et des capacités desdits un ou plusieurs deuxièmes équipements de communication, les capacités étant issues des données équipements, les traitements extraits étant adaptés pour être sélectionné par ledit premier équipement de communication, suite à cette sélection, délivré par ledit serveur de fourniture de services audit au moins un desdits un ou plusieurs deuxième équipements de communication et mis en œuvre par ledit au moins un desdits un ou plusieurs deuxième équipements de communication.

Un objet de l'invention est un procédé de déclaration d'un traitement à un serveur de fourniture de services comportant une fourniture d'un traitement et de données complémentaires associées auxdits traitement, les données complémentaires enregistrées étant adapté, lors d'une connexion d'un premier équipement de communication audit serveur de fourniture de services, pour une extraction par ledit serveur de fourniture de services parmi plusieurs traitements disponibles sur ledit serveur de fourniture de services en fonction desdites données complémentaires et de capacités d'un ou plusieurs deuxièmes équipements de communication appartenant au même réseau local que ledit premier équipement de communication, les capacités étant issues de données équipements transmises par le premier équipement au serveur de fourniture de services suite à une découverte d'équipements de communication dudit réseau local détectant un ou plusieurs deuxièmes équipements de communication connectés audit réseau local, lesdites données équipements comportent desdits données reçues par ledit premier équipement de communication desdits un ou plusieurs deuxièmes équipements de communication lors de la découverte, lesdits un ou plusieurs deuxièmes équipements de communication étant distincts dudit premier équipement de communication, les traitements extraits étant adaptés pour être sélectionné par ledit premier équipement de communication, suite à cette sélection, délivré par ledit serveur de fourniture de services audit au moins un desdits un ou plusieurs deuxième équipements de communication et mis en œuvre par ledit au moins un desdits un ou plusieurs deuxièmes équipements de communication.

Avantageusement, selon une implémentation de l'invention, les différentes étapes du procédé selon l'invention sont mises en œuvre par un logiciel ou programme d'ordinateur, ce logiciel comprenant des instructions logicielles destinées à être exécutées par un processeur de données d'un dispositif de déclaration et étant conçus pour commander l'exécution des différentes étapes de ce procédé.

L'invention vise donc aussi un programme comprenant des instructions de code de programme pour l'exécution des étapes du procédé de déclaration de traitements lorsque ledit programme est exécuté par un processeur.

Un objet de l'invention est un dispositif de déclaration d'un traitement à un serveur de fourniture de services comportant des moyens de fourniture d'un traitement et de données complémentaires associées auxdits traitement, les données complémentaires enregistrées étant adapté, lors d'une connexion d'un premier équipement de communication audit serveur de fourniture de services, pour une extraction par ledit serveur de fourniture de services parmi plusieurs traitements disponibles sur ledit serveur de fourniture de services en fonction desdites données complémentaires et de capacités d'un ou plusieurs deuxièmes équipements de communication appartenant au même réseau local que ledit premier équipement de communication, les capacités étant issues de données équipements transmises par le premier équipement au serveur de fourniture de services suite à une découverte d'équipements de communication dudit réseau local détectant un ou plusieurs deuxièmes équipements de communication connectés audit réseau local, lesdites données équipements comportent desdits données reçues par ledit premier équipement de communication desdits un ou plusieurs deuxièmes équipements de communication lors de la découverte, lesdits un ou plusieurs deuxièmes équipements de communication étant distincts dudit premier équipement de communication, les traitements extraits étant adaptés pour être sélectionné par ledit premier équipement de communication, suite à cette sélection, délivré par ledit serveur de fourniture de services audit au moins un desdits un ou plusieurs deuxième équipements de communication et mis en œuvre par ledit au moins un desdits un ou plusieurs deuxièmes équipements de communication.

Un objet de l'invention est un procédé de déclaration d'équipements par un premier équipement de communication à un serveur de fourniture de services comportant ;
- une transmission de données équipements concernant au moins un deuxième équipement de communication appartenant au même réseau local que ledit premier équipement de communication, ledit deuxième équipement de communication étant distinct dudit premier équipement de communication, les données équipements étant adaptées, lors d'une connexion dudit équipement de communication audit serveur de fourniture de services, pour une extraction par ledit serveur de fourniture de services parmi plusieurs traitements disponibles sur ledit serveur de fourniture de services en fonction de données complémentaires associées auxdits traitements et de capacités d'un ou plusieurs équipements de communication appartenant au même réseau local que ledit équipement de communication, les capacités étant issues des données équipements, les traitements extraits étant adaptés pour être sélectionné par ledit premier équipement de communication , suite à cette sélection, délivré par ledit serveur de fourniture de services audit au moins un desdits un ou plusieurs deuxième équipements de communication et mis en œuvre par ledit au moins un desdits un ou plusieurs deuxièmes équipements de communication, et
- une découverte (MNTR) d'équipements de communication dudit réseau local (1) détectant un ou plusieurs deuxièmes équipements de communication (11...14) connectés audit réseau local (1), lesdites données équipements comportent desdits données reçues par ledit premier équipement de communication (10) desdits un ou plusieurs deuxièmes équipements de communication (11...14) lors de ladite découverte (MNTR).

Avantageusement le procédé de déclaration d'équipements comporte une découverte d'équipements de communication dudit réseau local détectant un ou plusieurs deuxièmes équipements de communication connectés audit réseau local, lesdites données équipements comportent desdits données reçues par ledit premier équipement de communication desdits un ou plusieurs deuxièmes équipements de communications lors de ladite découverte.

Ainsi, l'équipement de communication de l'utilisateur facilite l'adaptation du serveur de fourniture de services aux évolutions du réseau local : ajout ou retrait d'un équipement sans déclaration préalable de l'utilisateur. Le serveur de fourniture de services propose donc un magasin d'application dynamique en fonction du réseau local déclaré par le premier équipement de communication de l'utilisateur connecté audit serveur de fourniture de services.

Avantageusement, le procédé de déclaration d'équipements comporte un enregistrement dans ledit équipement de communication desdites données équipements avec un marqueur temporel.

Avantageusement, selon une implémentation de l'invention, les différentes étapes du procédé selon l'invention sont mises en œuvre par un logiciel ou programme d'ordinateur, ce logiciel comprenant des instructions logicielles destinées à être exécutées par un processeur de données d'un dispositif faisant partie d'un équipement de communication et étant conçus pour commander l'exécution des différentes étapes de ce procédé.

L'invention vise donc aussi un programme comprenant des instructions de code de programme pour l'exécution des étapes du procédé de déclaration d'équipements lorsque ledit programme est exécuté par un processeur.

Ces programmes peuvent utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est un dispositif de déclaration d'équipements par un équipement de communication à un serveur de fourniture de services comportant des moyens de transmission de données équipements concernant au moins un deuxième équipement de communication appartenant au même réseau local que ledit premier équipement de communication, lesdites données équipements comportent des données reçues par ledit premier équipement de communication desdits un ou plusieurs deuxièmes équipements de communication lors d'une découverte d'équipements de communication dudit réseau local détectant un ou plusieurs deuxièmes équipements de communication connectés audit réseau local, les données équipements étant adaptées, lors d'une connexion dudit premier équipement de communication audit serveur de fourniture de services, pour une extraction par ledit serveur de fourniture de services parmi plusieurs traitements disponibles sur ledit serveur de fourniture de services en fonction de données complémentaires associées auxdits traitements et de capacités d'un ou plusieurs deuxièmes équipements de communication appartenant au même réseau local que ledit premier équipement de communication, ledit deuxième de communication étant distinct dudit premier équipement de communication, les capacités étant issues des données équipements, les traitements extraits étant adaptés pour être sélectionné par ledit premier équipement de communication, suite à cette sélection, délivré par ledit serveur de fourniture de services audit au moins un desdits un ou plusieurs deuxième équipements de communication et mis en œuvre par ledit au moins un desdits un ou plusieurs deuxièmes équipements de communication.

Un objet de l'invention est un premier équipement de communication comportant :
- des moyens de découverte d'équipements de communication dudit réseau local détectant un ou plusieurs deuxièmes équipements de communication connectés audit réseau local, lesdites données équipements comportent desdits données reçues par ledit premier équipement de communication desdits un ou plusieurs deuxièmes équipements de communication lors de ladite découverte, et
- un dispositif de déclaration d'équipements par ledit premier équipement de communication à un serveur de fourniture de services, ledit dispositif de déclaration d'équipements comportant des moyens de transmission de données équipements concernant au moins un deuxième équipement de communication appartenant au même réseau local que ledit premier équipement de communication, ledit deuxième équipement de communication étant distinct dudit premier équipement de communication, les données équipements étant adaptées, lors d'une connexion dudit premier équipement de communication audit serveur de fourniture de services, pour une extraction par ledit serveur de fourniture de services parmi plusieurs traitements disponibles sur ledit serveur de fourniture de services en fonction de données complémentaires associées auxdits traitements et de capacités d'un ou plusieurs deuxièmes équipements de communication appartenant au même réseau local que ledit premier équipement de communication, les capacités étant issues des données équipements, les traitements extraits étant adaptés pour être sélectionné par ledit premier équipement de communication, suite à cette sélection, délivré par ledit serveur de fourniture de services audit au moins un desdits un ou plusieurs deuxième équipements de communication et mis en œuvre par ledit au moins un desdits un ou plusieurs deuxièmes équipements de communication..

Les caractéristiques et avantages de l'invention apparaîtront plus clairement à la lecture de la description, faite à titre d'exemple, et des figures s'y rapportant qui représentent :
- Figure 1, un procédé de gestion de fourniture de services selon l'invention,
- Figure 2, un procédé de déclaration de traitement selon l'invention,
- Figure 3, un procédé de déclaration d'équipements selon l'invention,
- Figure 4, une architecture de communication comportant notamment un dispositif de gestion de fourniture de services selon l'invention,

Par service est entendu tout traitement mis en œuvre par un équipement de communication durant lequel un équipement de communication fournit à un utilisateur des éléments tels qu'une communication audio ou visio, des données tels qu'un bulletin météo ou une interface de recherche (notamment un moteur de recherche Internet ou dans un base de données spécialisées) ou une interface de gestion (album photo, carnet de santé, etc.)...

Par traitement est entendu tout procédé mettant en œuvre une recherche, une modification ou une gestion de données.

Par réseau local est entendu un réseau domestique radio et/ou filaire utilisant des protocoles tels que WiFi, Zigbee, Bluetooth, UpnP, CLP, Ethernet, etc.

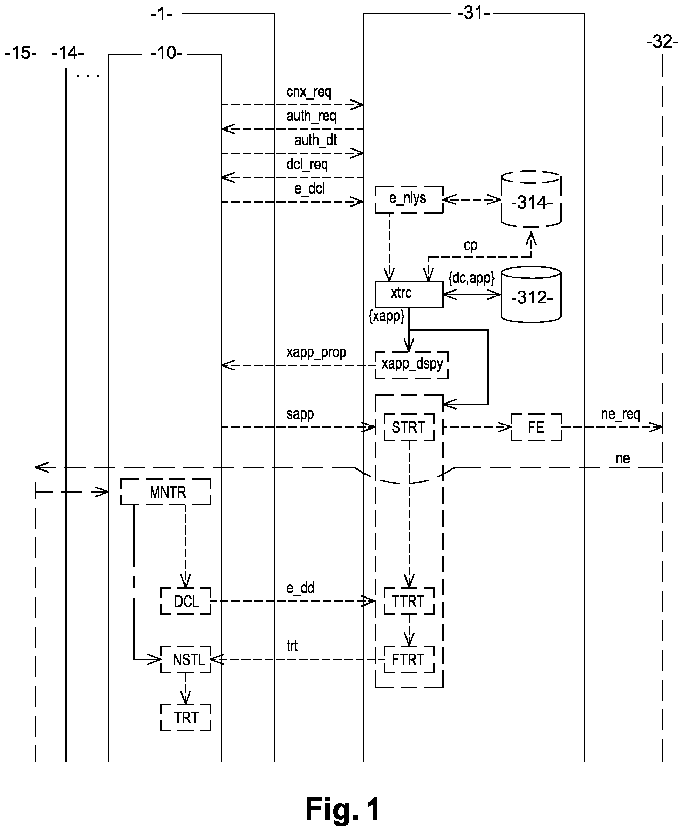

La figure 1 illustre un procédé de gestion de fourniture de services par un serveur de fourniture de services 31 à un équipement de communication ou premier équipement de communication 10 de traitements adaptés à un ou plusieurs équipements de communication ou deuxièmes équipements de communication 10...14 appartenant au même réseau local 1 que ledit premier équipement de communication 10. Les deuxièmes équipements de communication 11...14 sont distincts du premier équipement de communication. Le procédé de gestion de fourniture de services comporte, lors d'une connexion dudit équipement de communication 10 audit serveur de fourniture de services 31, une extraction *xtrc* parmi plusieurs traitements *app* disponibles sur ledit serveur de fourniture de services 31 en fonction de données complémentaires *de* associées auxdits traitements *app* et des capacités *cp* desdits un ou plusieurs équipements de communication 10...14, les traitements extraits *xapp* étant adaptés pour être sélectionné par ledit équipement de communication 10 et mis en œuvre par au moins un desdits un ou plusieurs équipements de communication.

En particulier, le procédé de gestion de fourniture de services comporte une réception d'une déclaration d'équipements *e_dcl* provenant dudit équipement de communication comportant des données équipements concernant au moins un équipement de communication dudit réseau local 1. Lesdites données équipements comportant notamment des données de signalisations telles que le type d'équipements de communication : caméra, télévision, décodeur, téléphone, capteurs de mouvement, etc. et des données complémentaires notamment le protocole de communication, la définition de la caméra, la dimension de l'écran, etc. La réception de cette déclaration d'équipements résulte notamment d'une demande de déclaration *dcl_req* du serveur de fourniture de services 31 à l'équipement de communication 10 lors de sa connexion *cnx_req.*

En particulier, le procédé de gestion de fourniture de services comporte une analyse *e-nlys* des données équipements fournissant lesdites capacités *cp* desdits un ou plusieurs équipements de communication 10... 14 en fonction desdites données équipements *e-dcl* transmises par l'équipement de communication 10 audit serveur de fourniture de services 31.

En particulier, les équipements de communication 10... 14 ainsi déclarés, c'est-à-dire le type d'équipement de communication et éventuellement un identifiant desdits équipements de communications, sont enregistrées avec leurs capacités *cp* dans une base de données d'équipements 314 du serveur de fourniture de services 31. Ainsi, lors de la prochaine connexion d'un des équipements de communication 10... 14 du réseau local 1 audit serveur de fourniture de service, le serveur de fourniture de services demandera notamment une déclaration des équipements de communication du réseau local *dcl-req* différentielle par rapport au précédent enregistrement, c'est-à-dire uniquement des nouveaux équipements, des équipements supprimés et des équipements dont au moins une des capacités a été modifiées.

En particulier, les capacités *cp* utilisées pour l'extraction *xtrc* provient soit directement de l'analyse des données équipements *e-nlys* soit de la base de données d'équipements 314.

L'extraction est faite en outre en fonction du type d'au moins un des équipements de communication 10...14 du réseau local 1.

L'extraction fournit au moins une liste de traitements adaptés, éventuellement ordonnées. L'ordonnancement de la liste de traitement est notamment fonction du nombre d'équipements de communication du réseau local 1 avec lequel un traitement est compatible, et/ou d'un niveau de compatibilité du traitement avec au moins un équipement de communication du réseau local. Par exemple, pour une liste de traitement comportant un traitement A, nécessitant une reproduction graphique de très haute résolution et un traitement B nécessitant une reproduction graphique de basse résolution, l'extraction proposera *xapp_prop* à un équipement de communication 10 d'un réseau local comportant une télévision, un visiophone, une console de jeux portable une liste de traitement dans laquelle le traitement B sera en première position car compatible avec l'ensemble des équipements de communication du réseau local alors que le traitement A sera en deuxième position car compatible avec uniquement la télévision.

En particulier, l'extraction fournit plusieurs listes de traitements : une première liste de traitements adaptés (c'est-à-dire compatibles avec au moins un équipement de communication du réseau local 1), et une deuxième liste de traitements pour lesquels le réseau local 1 est facilement adaptables c'est-à-dire que, moyennant une modification du réseau local 1 par un ajout d'un nouvel équipement de communication 14 ou d'une modification d'une capacité d'un équipement de communication existant du réseau local 1, les traitements proposés dans cette liste serait adaptés au réseau local 1 ainsi modifié. Cette deuxième liste comporte alors non seulement les traitements mais, pour chaque traitement, au moins une modification associé au traitement nécessaire pour adapter le réseau local 1.

En particulier, le procédé de gestion de fourniture de services comporte une notification des traitements extraits xapp_dspy adaptés pour transmettre au moins un liste de traitements adaptés *xappp_prop* proposés à l'équipement de communication 10. L'utilisateur de l'équipement de communication 10 pourra ainsi sélectionner au moins un traitement dans la liste de traitements proposés. L'équipement de communication 10 transmet alors cette sélection *sapp* audit serveur de fourniture de services 32. Le procédé de gestion de fourniture de services comporte notamment la réception STRT d'une sélection d'un traitement adapté parmi les traitements extraits déclenchant TTRT la fourniture du traitement sélectionné.

En particulier, le procédé de gestion de fourniture de services comporte une fourniture FE d'au moins un équipement de communication ou troisième équipement de communication 15 en fonction de données complémentaires *de* associées au traitement dont ledit équipement de communication requiert *sapp* une fourniture et des capacités *cp* desdits un ou plusieurs équipements de communication. Notamment, la réception de la sélection STRT comporte le déclenchement d'une fourniture d'équipement FE lorsque le traitement sélectionné nécessite une modification du réseau local 1. Par fourniture d'équipement est entendue une fourniture d'un nouvel équipement de communication 14 ou d'une modification d'une capacité d'un équipement de communication existant du réseau local 1 (notamment par la fourniture d'un nouveau traitement par exemple un codage vidéo spécifique). La fourniture d'équipement est notamment effectué par un serveur spécifique 32, notamment un magasin de produits partenaires, sur commande *ne_req* du serveur de fourniture de services 31. Le serveur spécifique 32 transmettra ne, par exemple, le nouvel équipement de communication 15 au réseau local 1.

Dans une variante de ce cas particulier, le procédé de gestion de fourniture de services déclenche TTRT la fourniture dudit traitement requis lorsque ledit procédé de gestion de fourniture de services reçoit *e_dcl* dudit équipement de communication 10 des données équipements transmises audit équipement de communication 10 par un équipement de communication 15 fournis audit réseau local 1 lors d'une découverte MNTR d'équipements mise en œuvre par ledit équipement de communication 10. Une alternative à cette variante comporte le déclenchement de l'installation NSTL du traitement fournis FTRT par le serveur de fourniture de services 31 32 lors de la découverte MNTR du nouvel équipement de communication 15.

La figure 1 illustre en outre un procédé de fourniture de services comportant le procédé de gestion de fourniture de services et préalablement à la mise en œuvre du procédé de gestion de fourniture de services un procédé d'authentification (non illustré) notamment commandé par le serveur de fourniture de services 31 et mis en œuvre par un serveur d'authentification non illustré. Le serveur de fourniture de services 31 demande une authentification *auth_req*, directement ou indirectement, à l'équipement de communication 10 ayant demandé une connexion *cnx_req* L'équipement de communication 10 envoie en réponse des données d'authentification *auth_dt* qui seront vérifiés. Le procédé de gestion de fourniture de services ne sera mis en œuvre que si l'équipement de communication 10 est correctement authentifié.

Le procédé de fourniture de services comporte en particulier la fourniture du traitement FTRT en fonction du procédé de gestion de fourniture de services, notamment sur déclenchement TTRT par le procédé de gestion de fourniture de services. Cette fourniture de traitement comporte notamment le téléchargement du traitement par le serveur de fourniture de services 31 sur au moins un équipement de communication du réseau local 1 et le déclenchement de l'installation NSTL du traitement sur au moins un équipement de communication du réseau local 1.

Ce procédé peut être mis en œuvre sous forme d'un programme comprenant des instructions de code de programme pour l'exécution des étapes du procédé de gestion de fourniture de services lorsque ledit programme est exécuté par un processeur.

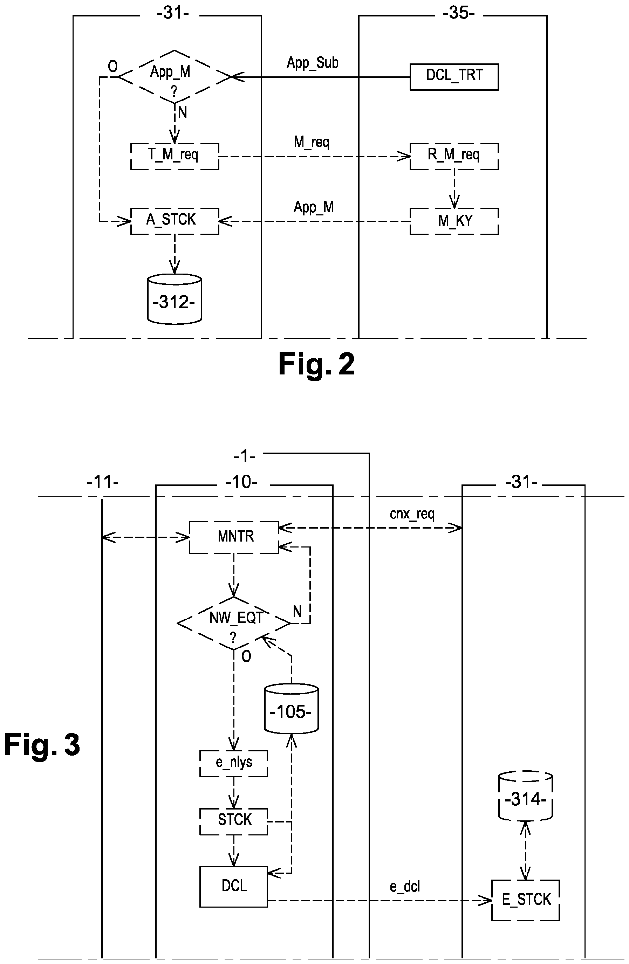

La figure 2 illustre un procédé de déclaration de traitements à un serveur de fourniture de services 31.

Le procédé de déclaration d'un traitement à un serveur de fourniture de services 31 comporte une fourniture DCL_TRT d'un traitement *App* et de données complémentaires de associées auxdits traitement, les données complémentaires *dc* enregistrées étant adapté, lors d'une connexion d'un équipement de communication audit serveur de fourniture de services 31 , pour une extraction par ledit serveur de fourniture de services 31 parmi plusieurs traitements disponibles sur ledit serveur de fourniture de services 31 en fonction desdites données complémentaires et de capacités d'un ou plusieurs équipements de communication appartenant au même réseau local que ledit équipement de communication, les traitements extraits étant adaptés pour être sélectionné par ledit équipement de communication et mis en œuvre par au moins un desdits un ou plusieurs équipements de communication.

Ce procédé de déclaration est notamment mis en œuvre par un dispositif de déclaration de traitement 35 qui transmet *App_Sub* le traitement *App* et les données complémentaires *de* associées audit serveur de fourniture de services 31. Le serveur de fourniture de services 31 comporte notamment une vérification *App_M ?* de la soumission *App_Sub* faite par le dispositif de déclaration de traitement 35, en particulier si la soumission comporte des données complémentaires. Ainsi, si la soumission ne comporte pas de données complémentaires N, le serveur de fourniture de service transmet T_M_Req une demande de données complémentaires M_req. Le procédé de déclaration comporte alors une réception R_M_Req de la requête de données complémentaires et la transmission M_KY d'une réponse *App_M* comportant éventuellement des données complémentaires associées audit traitement soumis. Le serveur de fournitures de services enregistre A_STCK dans sa base de données de traitement 312, le traitement et les données complémentaires fournis (par données complémentaires sont entendus des données concernant le type d'équipements de communication adaptés à la mise en œuvre du traitement, éventuellement le nombre d'équipements de communication de chaque type d'équipement, les capacités des équipements de communication nécessaire à la mise en œuvre du traitement, etc.).

En particulier, le serveur de fourniture de services met en œuvre un procédé d'enregistrement de traitement comportant le stockage A_STCK dans la base de données des traitements 312 d'au moins un traitement et des données complémentaires soumis par un dispositif de déclaration de traitement 35. Notamment, le procédé d'enregistrement comporte la vérification App_M ? et la transmission T_M_Req, lorsque la soumission ne comporte pas de données complémentaires, d'une demande de données complémentaires.

Ce procédé peut être mis en œuvre sous forme d'un programme comprenant des instructions de code de programme pour l'exécution des étapes du procédé de déclaration de traitement lorsque ledit programme est exécuté par un processeur.

La figure 3 illustre un procédé de déclaration d'équipements mis en œuvre par un équipement de communication 10 d'un réseau local 1.

Le procédé de déclaration d'équipements par un équipement de communication 10 à un serveur de fourniture de services 31 comporte une transmission DCL de données équipements *e-dcl* concernant au moins un équipement de communication 10, 11 appartenant au même réseau local 1 que ledit équipement de communication 10, les données équipements étant adaptées, lors d'une connexion *cnx_req* dudit équipement de communication audit serveur de fourniture de services, pour une extraction par ledit serveur de fourniture de services parmi plusieurs traitements disponibles sur ledit serveur de fourniture de services en fonction desdites données complémentaires et de capacités d'un ou plusieurs équipements de communication appartenant au même réseau local que ledit équipement de communication, les capacités étant issues des données équipements, les traitements extraits étant adaptés pour être sélectionné par ledit équipement de communication et mis en œuvre par au moins un desdits un ou plusieurs équipements de communication.

En particulier, le procédé de déclaration d'équipements comporte une découverte MNTR d'équipements de communication dudit réseau local détectant un ou plusieurs équipements de communication connectés audit réseau local, lesdites données équipements comportent desdits données reçues par ledit équipement de communication desdits un ou plusieurs équipements de communications lors de ladite découverte.

En particulier, le procédé de déclaration d'équipements comporte un enregistrement STCK dans ledit équipement de communication 10 desdites données équipements, notamment avec un marqueur temporel. L'enregistrement est par exemple effectué dans une base de données d'équipements 105 dudit équipement de communication 10. Ledit équipement mettant en œuvre le procédé de déclaration d'équipements est en particulier une passerelle domestique.

En particulier, le procédé de déclaration d'équipements comporte une détection des nouveaux équipements NW_EQT ? dans les équipements découverts notamment en fonction des équipements déjà enregistrés dans la base de données d'équipements 105 de l'équipement de communication 10 ou dans la base de données d'équipements du serveur de fourniture de services 31 (ce deuxième cas n'étant pas illustré).

En particulier, le procédé de déclaration d'équipements comporte une analyse des capacités *e_nlys* au moins des nouveaux équipements découverts, voire de tout les équipements découverts et fournis les capacités cp associées à chacun de ces équipements découverts au moins pour leur transmission DCL au serveur de fourniture de services 31, voire le cas échéant pour leur enregistrement STCK par ledit équipement de communication 10.

Ce procédé peut être mis en œuvre sous forme d'un programme comprenant des instructions de code de programme pour l'exécution des étapes du procédé de déclaration d'équipements lorsque ledit programme est exécuté par un processeur.

L'invention vise aussi au moins un support pour au moins l'un des programmes de gestion de fourniture de services, de déclaration de traitement, de déclaration d'équipement.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en œuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonction selon la description ci-dessous. Un composant matériel correspond à tout élément d'un ensemble matériel (ou hardware) apte à mettre en œuvre une fonction ou un ensemble de fonctions.

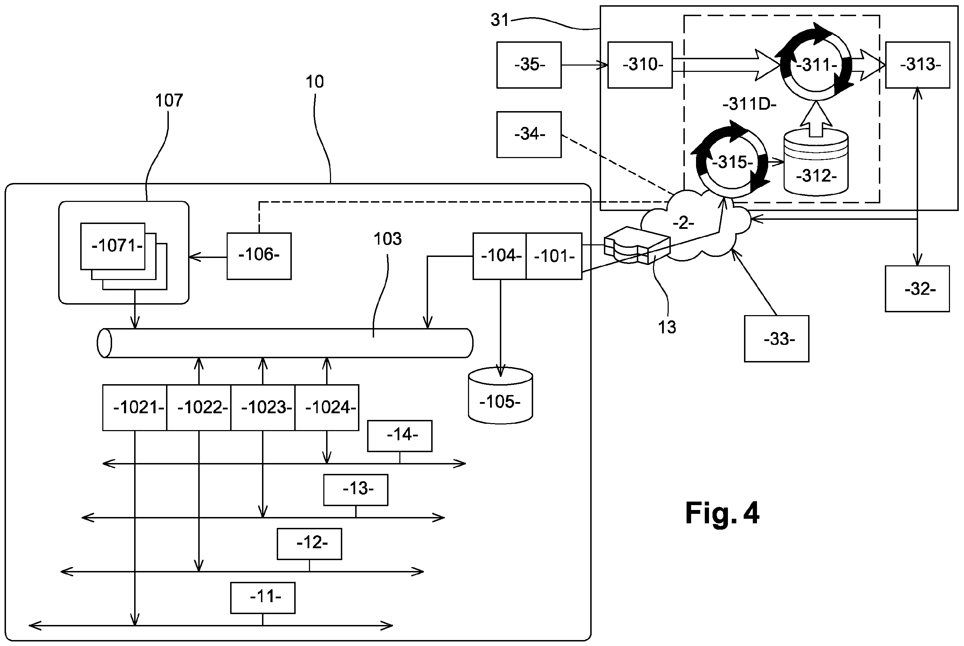

La figure 4 illustre une architecture de communication comportant notamment un dispositif de gestion de fourniture de services 311_D selon l'invention.

Le dispositif de gestion de la fourniture de services 311_D d'un serveur de fourniture de services 31 à un équipement de communication 10 de traitements adaptés à un ou plusieurs équipements de communication appartenant au même réseau local 1 que ledit équipement de communication 10 comportant des moyens d'extraction 311, lors d'une connexion dudit équipement de communication 10 audit serveur de fourniture de services 31, parmi plusieurs traitements disponibles sur ledit serveur de fourniture de services en fonction de données complémentaires associées auxdits traitements et des capacités desdits un ou plusieurs équipements de communication, les traitements extraits étant adaptés pour être sélectionné par ledit équipement de communication et mis en œuvre par au moins un desdits un ou plusieurs équipements de communication.

L'architecture comporte, notamment, au moins un dispositif de déclaration d'un traitement 35 à un serveur de fourniture de services comportant des moyens de fourniture 351 d'un traitement *App* et de données complémentaires *dc* associées auxdits traitement, les données complémentaires enregistrées étant adapté, lors d'une connexion d'un équipement de communication audit serveur de fourniture de services, pour une extraction par ledit serveur de fourniture de services parmi plusieurs traitements disponibles sur ledit serveur de fourniture de services en fonction desdites données complémentaires et de capacités d'un ou plusieurs équipements de communication appartenant au même réseau local que ledit équipement de communication, les traitements extraits étant adaptés pour être sélectionné par ledit équipement de communication et mis en œuvre par au moins un desdits un ou plusieurs équipements de communication.

L'architecture comporte au moins un réseau local 1 doté de plusieurs équipements de communication dont au moins un des équipements de communications 10 comporte un dispositif de déclaration d'équipement 104.

Le dispositif de déclaration d'équipements 104 par un équipement de communication 10 à un serveur de fourniture de services 31 comportant des moyens de transmission de données équipements 101 concernant au moins un équipement de communication appartenant au même réseau local que ledit équipement de communication, les données équipements étant adaptées, lors d'une connexion dudit équipement de communication audit serveur de fourniture de services, pour une extraction par ledit serveur de fourniture de services parmi plusieurs traitements disponibles sur ledit serveur de fourniture de services en fonction desdites données complémentaires et de capacités d'un ou plusieurs équipements de communication appartenant au même réseau local que ledit équipement de communication, les capacités étant issues des données équipements, les traitements extraits étant adaptés pour être sélectionné par ledit équipement de communication et mis en œuvre par au moins un desdits un ou plusieurs équipements de communication suite à cette sélection

En associant ainsi un mécanisme de découverte des équipements et d'analyse de ces capacités avec un serveur de fourniture de services ou magasin d'application associé à un mécanisme de recoupement avec les exigences d'équipements nécessaires pour le fonctionnement des traitements ou applications fournis par ce serveur de fourniture de services, l'invention permet de proposer aux utilisateurs des traitements plus variés et optimisant l'utilisation de tous les équipements dont l'utilisateur dispose dans son réseau local sans nécessiter de la part de l'utilisateur une connaissance des capacités de ses équipements.

Afin de respecter la vie privée du client, cette déclaration des équipements est à l'initiative du client qui choisit ou non de permettre au dispositif de déclaration des équipements de transmettre une déclaration d'équipements à un serveur de fourniture de service. Ce choix peut être générique pour tout les fournisseurs de services ou effectué fournisseur par fournisseur, voire l'utilisateur peut choisir de déclarer certains équipements mais pas tous. Une interface de type formulaire ou boite à cocher permet d'indiquer quelle option de déclaration d'équipement l'utilisateur choisit : aucune déclaration, déclaration partielle des équipements en cochant dans une liste les équipements découverts à déclarer par exemple, déclaration de tous les équipements, déclaration à tous les fournisseurs de services auxquels l'équipement de communication se connecte, déclaration à tous les fournisseurs de services auxquels l'utilisateur est abonné, déclaration à certains fournisseurs de services (l'utilisateur saisira par exemple l'adresse du fournisseur de service pour lequel une déclaration peut être transmise).

Un fabricant d'un traitement ou développeur d'une application soumet le traitement et déclare le type d'équipement nécessaire pour le bon fonctionnement de son traitement au moyen d'un dispositif de déclaration de traitement 35 au serveur de fourniture de service 31, en particulier à l'interface d'entrée 310. La déclaration du type d'équipement peut être précise : type ou profil d'équipement (télévision, caméra, micro, etc.) ainsi que des données techniques quant aux capacités de l'équipement (codage MP4, etc.), ou plus simple : juste le type d'équipement.

Un dispositif de déclaration d'équipement 104 d'un équipement de communication 10 d'un réseau local 1 détecte de manière centralisée tous les équipements de communication 11, 12, 13, 14, 15 raccordés au réseau local 1 de l'utilisateur. En particulier, le dispositif de déclaration d'équipement 104 est en état de fonctionnement permanent dans le réseau local 1. Pour cela, le dispositif de déclaration d'équipement 104 s'appuie notamment sur différentes couches de connectivité (réseau IP, Zigbee, Bluetooth, etc.) et des mécanismes de découverte automatique lié à chaque protocole (pour Upnpn :SSDP, pour Zigbee :Devise Discovery, pour bluetooth : HCI) qui s'annonce automatiquement et régulièrement sur le réseau. Sur la figure 4, l'équipement de communication 10 est communique avec les équipements 11, 12, 14 et 15 via un bus logiciel orienté message, par exemple D-Bus, puis respectivement grâce à un Point de control UpnP sur le réseau UPnP, grâce à un driver X2D sur le réseau HA (X2D), grâce à un driver Zigbee sur le réseau Zigbee, et grâce à un driver Continua Alliance sur le réseau Bluetooth/continua alliance. Ces protocoles de communication sont donnés à titre d'exemple, il n'y a pas de limite sur le nombre et le type de protocoles supportés par le système selon l'invention.

L'équipement de communication comporte éventuellement des moyens d'exécution de traitement 107 pour l'exécution de traitements 1071...

Toutes ces annonces sont stockées localement en base 105 avec un marqueur temporel notamment pour identifier si cet équipement à été récemment connectés au réseau local 1. L'utilisateur de l'équipement de communication 10 et/ou le serveur de fourniture de services 31 peut en particulier forcer une redécouverte des équipements connectés en forçant l'émission de trame demandant aux équipements du réseau local de répondre dans un délai imparti (dans le cas du protocole UPnP en utilisant la requête M-SEARCH).

Le dispositif de déclaration d'équipement 104 envoie dans le réseau de l'opérateur 2 des données équipements ou données brutes collectées sur le réseau local 1 vers le serveur de fourniture de services 31 en particulier aux moyens d'analyse 315 notamment via son interface d'entrée 310 aussi appelée magasin d'application Back end (non illustré).

Le dispositif de gestion de fourniture de services 311_D comporte des moyens d'analyse 315 des données équipements de chaque équipement notamment sur la base de leur signature et en sort les capacités des équipements notamment en fonction d'un référentiel métier dans le dispositif de gestion de fourniture de service 311_D.

Le dispositif de gestion de fourniture de service 311_D comporte en outre une base des traitements 312 renseignée pour chaque traitement de données complémentaires indiquant une liste d'équipements obligatoire et éventuellement une liste d'équipements facultatifs à la mise en œuvre du traitement.

Dès que l'utilisateur se connecte au moyen de son équipement de communication 10 au serveur de fourniture de services 31 notamment à son interface d'entrée 310 et, si le dispositif de déclaration d'équipement est actif, le dispositif de gestion fourniture de services 311_D détermine les traitements en lien avec les équipements découverts sur le réseau local 1 de l'utilisateur. En particulier, le dispositif de gestion de fourniture de services associe lors de l'extraction un score pour chaque traitement pour le contexte donné (c'est-à-dire les équipements découverts et leurs capacités). Le dispositif de gestion de fourniture de services ordonnera éventuellement les traitements en fonction du score affecté pour chaque traitement pour proposer à l'utilisateur en tête de liste les traitements qui permette de réutiliser au mieux les équipements connectés au réseau local 1.

Si des équipements nécessaires au fonctionnement du traitement ne sont pas présents sur le réseau local 1, le dispositif de gestion de fourniture de services indiquera un score bas et la nécessité d'acquérir ou de louer un équipement complémentaire pour mettre en œuvre le traitement. Si l'utilisateur sélectionne un tel traitement, l'utilisateur se verra proposer la sélection (pour notamment l'achat ou la location) de l'équipement complémentaire nécessaire en particulier en étant rediriger vers un serveur de fourniture d'équipement 32.

Lorsque l'équipement complémentaire est installé dans le réseau local 1 notamment par l'utilisateur, le dispositif de déclaration d'équipement 104 détecte le nouvel équipement et déclenche l'installation du traitement sélectionné.

Les moyens de mise à jour de traitement 106 de l'équipement de communication 10 procèdent à l'installation du traitement pour son exécution par les moyens d'exécution 107.

L'architecture est en particulier complétée par un serveur de mise à jour de traitement 34 et/ou un annuaire 33 de connexion à distance du réseau local 1.

## Revendications

1. Procédé de gestion de fourniture de services par un serveur de fourniture de services (31) à un premier équipement de communication (10) de traitements (app) adaptés à un ou plusieurs deuxièmes équipements de communication (11...14) appartenant au même réseau local (1) que ledit premier équipement de communication (10), lesdits un ou plusieurs deuxièmes équipements de communication (11...14) étant distincts dudit premier équipement de communication (10), **caractérisé en ce que** le procédé de gestion comporte, lors d'une connexion (cnx_req) dudit premier équipement de communication (10) audit serveur de fourniture de services (31):
• une réception de données d'équipements (e_dcl) relatives à au moins un des deuxièmes équipements, les données d'équipements étant transmises par le premier équipement au serveur de fourniture de services (31) suite à une découverte (MNTR) d'équipements de communication dudit réseau local (1) détectant un ou plusieurs deuxièmes équipements de communication (11...14) connectés audit réseau local (1), lesdites données équipements comportent desdits données reçues par ledit premier équipement de communication (10) desdits un ou plusieurs deuxièmes équipements de communication (11...14) lors de ladite découverte (MNTR), et
• une extraction (xtrc) parmi plusieurs traitements (app) disponibles sur ledit serveur de fourniture de services (31) en fonction de données complémentaires (dc) associées auxdits traitements (app) et des capacités (cp) desdits un ou plusieurs deuxièmes équipements de communication (11...14), les capacités (cp) étant issues des données équipements, les traitements (app) extraits étant adaptés pour être :
- sélectionné par ledit premier équipement de communication (10),
- suite à cette sélection, délivré par ledit serveur de fourniture de services (31) audit au moins un desdits un ou plusieurs deuxième équipements de communication
- et mis en œuvre par ledit au moins un desdits un ou plusieurs deuxième équipements de communication.

2. Procédé de gestion de fourniture de services selon la revendication précédente **caractérisé en ce que** ledit procédé de gestion de fourniture de services comporte une analyse de données équipements (e_nlys) fournissant lesdites capacités (cp) desdits un ou plusieurs deuxièmes équipements de communication (11...14) en fonction desdites données équipements transmises par ledit premier équipement de communication (10) audit serveur de fourniture de services (31).

3. Procédé de gestion de fourniture de services selon l'une quelconque des revendications précédentes **caractérisé en ce que** ledit procédé de gestion de fourniture de services comporte une fourniture (FE) d'au moins un troisième équipements de communication (15) en fonction de données complémentaires (dc) associées au traitement (app) dont ledit troisième équipement de communication requiert une fourniture et des capacités (cp) desdits un ou plusieurs deuxièmes équipements de communication (11...14).

4. Procédé de gestion de fourniture de services selon la revendication précédente **caractérisé en ce que** ledit procédé de gestion de fourniture de services déclenche la fourniture dudit traitement (TTRT) requis lorsque ledit procédé de gestion de fourniture de services reçoit dudit premier équipement de communication (10) des données équipements transmises audit premier équipement de communication (10) par un troisième équipement de communication (15) fournis audit réseau local (1) lors d'une découverte d'équipements (MNTR) mise en œuvre par ledit premier équipement de communication (10).

5. Programme comprenant des instructions de code de programme pour l'exécution des étapes du procédé de gestion de fourniture de services selon l'une quelconque des revendications 1 à 4 lorsque ledit programme est exécuté par un processeur.

6. Dispositif de gestion de la fourniture de services d'un serveur de fourniture de services (31) à un premier équipement de communication (10) de traitements (app) adaptés à un ou plusieurs deuxièmes équipements de communication (11...14) appartenant au même réseau local (1) que ledit premier équipement de communication (10), lesdits un ou plusieurs deuxièmes équipements de communication (11...14) étant distincts dudit premier équipement de communication (10), **caractérisé en ce que** le dispositif de gestion de la fourniture de services comporte :
• une interface d'entrée (310) de données d'équipements relatives à au moins un des deuxièmes équipements (11...14), les données d'équipements (e_dcl) étant transmises par le premier équipement (10) au serveur de fourniture de services (31) suite à une découverte (MNTR) d'équipements de communication dudit réseau local (1) détectant un ou plusieurs deuxièmes équipements de communication (11...14) connectés audit réseau local (1), lesdites données équipements (e_dcl) comportent desdits données reçues par ledit premier équipement de communication (10) desdits un ou plusieurs deuxièmes équipements de communication (11...14) lors de ladite découverte (MNTR), et
• des moyens d'extraction (311), lors d'une connexion (cnx_req) dudit premier équipement de communication (10) audit serveur de fourniture de services (31), parmi plusieurs traitements (app) disponibles sur ledit serveur de fourniture de services (31) en fonction de données complémentaires (dc) associées auxdits traitements (app) et des capacités (cp) desdits un ou plusieurs deuxièmes équipements de communication (11...14), les capacités (cp) étant issues des données équipements, les traitements (app) extraits étant adaptés pour être sélectionné par ledit premier équipement de communication (10), suite à cette sélection, délivré par ledit serveur de fourniture de services (31) audit au moins un desdits un ou plusieurs deuxième équipements de communication (11..14) et mis en œuvre par ledit au moins un desdits un ou plusieurs deuxième équipements de communication (11..14).

7. Procédé de déclaration d'un traitement à un serveur de fourniture de services (31) **caractérisé en ce que** le procédé de déclaration de traitements comporte une fourniture (DCL_TRT) d'un traitement (app) et de données complémentaires (dc) associées auxdits traitements (app), les données complémentaires (dc) enregistrées étant adapté, lors d'une connexion (cnx_req) d'un premier équipement de communication (10) audit serveur de fourniture de services (31), pour une extraction (xtrc) par ledit serveur de fourniture de services (31) parmi plusieurs traitements(app) disponibles sur ledit serveur de fourniture de services (31) en fonction desdites données complémentaires (dc) et de capacités (cp) d'un ou plusieurs deuxièmes équipements de communication (11...14) appartenant au même réseau local (1) que ledit premier équipement de communication (10), les capacités (cp) étant issues de données équipements transmises par le premier équipement au serveur de fourniture de services (31) suite à une découverte (MNTR) d'équipements de communication dudit réseau local (1) détectant un ou plusieurs deuxièmes équipements de communication (11...14) connectés audit réseau local (1), lesdites données équipements comportent desdits données reçues par ledit premier équipement de communication (10) desdits un ou plusieurs deuxièmes équipements de communication (11...14) lors de la découverte (MNTR), lesdits un ou plusieurs deuxièmes équipements de communication (11...14) étant distincts dudit premier équipement de communication, les traitements (app) extraits étant adaptés pour être sélectionné par ledit premier équipement de communication (10), suite à cette sélection, délivré par ledit serveur de fourniture de services (31) audit au moins un desdits un ou plusieurs deuxième équipements de communication et mis en œuvre par ledit au moins un desdits un ou plusieurs deuxièmes équipements de communication (11 ...14).

8. Programme comprenant des instructions de code de programme pour l'exécution des étapes du procédé de déclaration de traitements (app) selon la revendication 7 lorsque ledit programme est exécuté par un processeur.

9. Dispositif de déclaration d'un traitement (35) à un serveur de fourniture de services (31), **caractérisé en ce que** le dispositif de déclaration de traitements comporte des moyens de fourniture d'un traitement et de données complémentaires (dc) associées auxdits traitements (app), les données complémentaires (dc) enregistrées étant adapté, lors d'une connexion (cnx_req) d'un premier équipement de communication (10) audit serveur de fourniture de services (31), pour une extraction (xtrc) par ledit serveur de fourniture de services (31) parmi plusieurs traitements (app) disponibles sur ledit serveur de fourniture de services (31) en fonction desdites données complémentaires (dc) et de capacités (cp) d'un ou plusieurs deuxièmes équipements de communication (11...14) appartenant au même réseau local (1) que ledit premier équipement de communication (10), les capacités (cp) étant issues de données équipements transmises par le premier équipement au serveur de fourniture de services (31) suite à une découverte (MNTR) d'équipements de communication dudit réseau local (1) détectant un ou plusieurs deuxièmes équipements de communication (11...14) connectés audit réseau local (1), lesdites données équipements comportent desdits données reçues par ledit premier équipement de communication (10) desdits un ou plusieurs deuxièmes équipements de communication (11...14) lors de la découverte (MNTR), lesdits un ou plusieurs deuxièmes équipements de communication (11...14) étant distincts dudit premier équipement de communication (10), les traitements (app) extraits étant adaptés pour être sélectionné par ledit premier équipement de communication (10), suite à cette sélection, délivré par ledit serveur de fourniture de services (31) audit au moins un desdits un ou plusieurs deuxième équipements de communication et mis en œuvre par ledit au moins un desdits un ou plusieurs deuxièmes équipements de communication (11...14).

10. Procédé de déclaration d'équipements par un premier équipement de communication (10) à un serveur de fourniture de services (31), caractérisé en ce quele procédé de déclaration d'équipements comporte :
• une transmission (CDL) de données équipements (e_dcl) concernant au moins un deuxième équipement de communication appartenant au même réseau local (1) que ledit premier équipement de communication (10), ledit deuxième équipement de communication étant distinct dudit premier équipement de communication (10), les données équipements étant adaptées, lors d'une connexion (cnx_req) dudit équipement de communication audit serveur de fourniture de services (31), pour une extraction (xtrc) par ledit serveur de fourniture de services (31) parmi plusieurs traitements (app) disponibles sur ledit serveur de fourniture de services en (31) fonction de données complémentaires (dc) associées auxdits traitements (app) et de capacités (cp) d'un ou plusieurs équipements de communication appartenant au même réseau local (1) que ledit équipement de communication, les capacités (cp) étant issues des données équipements, les traitements (app) extraits étant adaptés pour être sélectionné par ledit premier équipement de communication (10), suite à cette sélection, délivré par ledit serveur de fourniture de services (31) audit au moins un desdits un ou plusieurs deuxième équipements de communication et mis en œuvre par ledit au moins un desdits un ou plusieurs deuxièmes équipements de communication (11...14), et
• une découverte (MNTR) d'équipements de communication dudit réseau local (1) détectant un ou plusieurs deuxièmes équipements de communication (11...14) connectés audit réseau local (1), lesdites données équipements comportent desdits données reçues par ledit premier équipement de communication (10) desdits un ou plusieurs deuxièmes équipements de communication (11...14) lors de ladite découverte (MNTR).

11. Procédé de déclaration d'équipements selon la revendication 10 **caractérisé en ce que** ledit procédé de déclaration d'équipements comporte un enregistrement dans ledit premier équipement de communication (10) desdites données équipements avec un marqueur temporel.

12. Programme comprenant des instructions de code de programme pour l'exécution des étapes du procédé de déclaration d'équipements selon l'une quelconque des revendications 10 à 11 lorsque ledit programme est exécuté par un processeur.

13. Dispositif de déclaration d'équipements (104) par un équipement de communication (10) à un serveur de fourniture de services (31), **caractérisé en ce que** le dispositif de déclaration d'équipements comporte des moyens de transmission de données équipements (101) concernant au moins un deuxième équipement de communication (11...14) appartenant au même réseau local (1) que ledit premier équipement de communication (10), lesdites données équipements comportent des données reçues par ledit premier équipement de communication (10) desdits un ou plusieurs deuxièmes équipements de communication (11...14) lors d'une découverte (MNTR) d'équipements de communication (11...14) dudit réseau local (1) détectant un ou plusieurs deuxièmes équipements de communication (11...14) connectés audit réseau local (1), les données équipements étant adaptées, lors d'une connexion (cnx_req) dudit premier équipement de communication (10) audit serveur de fourniture de services (31), pour une extraction (xtrc) par ledit serveur de fourniture de services (31) parmi plusieurs traitements (app) disponibles sur ledit serveur de fourniture de services (31) en fonction de données complémentaires (dc) associées auxdits traitements (app) et de capacités (cp) d'un ou plusieurs deuxièmes équipements de communication (11...14) appartenant au même réseau local (1) que ledit premier équipement de communication (10), ledit deuxième équipement de communication étant distinct dudit premier équipement de communication (10), les capacités (cp) étant issues des données équipements, les traitements (app) extraits étant adaptés pour être sélectionné par ledit premier équipement de communication (10), suite à cette sélection, délivré par ledit serveur de fourniture de services (31) audit au moins un desdits un ou plusieurs deuxième équipements de communication et mis en œuvre par ledit au moins un desdits un ou plusieurs deuxièmes équipements de communication (11...14).

14. Premier Équipement de communication (10) comportant :
• des moyens de découverte (103) d'équipements de communication (11...14) dudit réseau local (1) détectant un ou plusieurs deuxièmes équipements de communication (11...14) connectés audit réseau local (1), lesdites données équipements (e_dcl) comportent desdits données reçues par ledit premier équipement de communication (10) desdits un ou plusieurs deuxièmes équipements de communication (11...14) lors de ladite découverte (MNTR), et
• un dispositif de déclaration d'équipements (104) par ledit premier équipement de communication (10) à un serveur de fourniture de services (31), ledit dispositif de déclaration d'équipements comportant des moyens de transmission de données équipements concernant au moins un deuxième équipement de communication appartenant au même réseau local (1) que ledit premier équipement de communication (10), ledit deuxième équipement de communication étant distinct dudit premier équipement de communication (10), les données équipements étant adaptées, lors d'une connexion (cnx_req) dudit premier équipement de communication (10) audit serveur de fourniture de services (31), pour une extraction (xtrc) par ledit serveur de fourniture de services (31) parmi plusieurs traitements (app) disponibles sur ledit serveur de fourniture de services (31) en fonction de données complémentaires (dc) associées auxdits traitements (app) et de capacités (cp) d'un ou plusieurs deuxièmes équipements de communication (11...14) appartenant au même réseau local (1) que ledit premier équipement de communication (10), les capacités (cp) étant issues des données équipements, les traitements (app) extraits étant adaptés pour être sélectionné par ledit premier équipement de communication (10), suite à cette sélection, délivré par ledit serveur de fourniture de services (31) audit au moins un desdits un ou plusieurs deuxième équipements de communication et mis en œuvre par ledit au moins un desdits un ou plusieurs deuxièmes équipements de communication (11 ...14).

## Patentansprüche

1. Verfahren zur Verwaltung der Bereitstellung von Diensten, durch einen Dienstbereitstellungsserver (31) an eine erste Kommunikationseinrichtung (10), von Verarbeitungen (app), die an eine oder mehrere zweite Kommunikationseinrichtungen (11...14) angepasst sind, die zu demselben lokalen Netz (1) wie die erste Kommunikationseinrichtung (10) gehören, wobei die eine oder mehreren zweiten Kommunikationseinrichtungen (11...14) von der ersten Kommunikationseinrichtung (10) verschieden sind, **dadurch gekennzeichnet, dass** das Verfahren zur Verwaltung während einer Verbindung (cnx_req) der ersten Kommunikationseinrichtung (10) mit dem Dienstbereitstellungsserver (31) umfasst:
• einen Empfang von Daten von Einrichtungen (e_dcl), die sich auf wenigstens eine der zweiten Einrichtungen beziehen, wobei die Daten von Einrichtungen durch die erste Einrichtung an den Dienstbereitstellungsserver (31) im Anschluss an eine Ermittlung (MNTR) von Kommunikationseinrichtungen des lokalen Netzes (1) übertragen werden, die eine oder mehrere zweite Kommunikationseinrichtungen (11...14) erkennt, die mit dem lokalen Netz (1) verbunden sind, wobei diese Einrichtungsdaten Daten umfassen, die durch die erste Kommunikationseinrichtung (10) von den ein oder mehreren zweiten Kommunikationseinrichtungen (11...14) während der Ermittlung (MNTR) empfangen werden, und
• eine Extraktion (xtrc) aus mehreren Verarbeitungen (app), die auf dem Dienstbereitstellungsserver (31) verfügbar sind, in Abhängigkeit von ergänzenden Daten (dc), die den Verarbeitungen (app) zugeordnet sind, und von den Fähigkeiten (cp) der einen oder mehreren zweiten Kommunikationseinrichtungen (11...14), wobei die Fähigkeiten (cp) aus den Einrichtungsdaten stammen, wobei die extrahierten Verarbeitungen (app) dafür ausgelegt sind:
- durch die erste Kommunikationseinrichtung (10) ausgewählt zu werden,
- im Anschluss an diese Auswahl durch den Dienstbereitstellungsserver (31) an die wenigstens eine der einen oder mehreren zweiten Kommunikationseinrichtungen geliefert zu werden
- und von der wenigstens einen der einen oder mehreren zweiten Kommunikationseinrichtungen durchgeführt zu werden.

2. Verfahren zur Verwaltung der Bereitstellung von Diensten nach dem vorhergehenden Anspruch, **dadurch gekennzeichnet, dass** das Verfahren zur Verwaltung der Bereitstellung von Diensten eine Analyse von Einrichtungsdaten (e_nlys) umfasst, welche die Fähigkeiten (cp) der einen oder mehreren zweiten Kommunikationseinrichtungen (11...14) in Abhängigkeit von den Einrichtungsdaten liefert, die durch die erste Kommunikationseinrichtung (10) an den Dienstbereitstellungsserver (31) übertragen werden.

3. Verfahren zur Verwaltung der Bereitstellung von Diensten nach einem der vorhergehenden Ansprüche, **dadurch gekennzeichnet, dass** das Verfahren zur Verwaltung der Bereitstellung von Diensten eine Bereitstellung (FE) wenigstens einer dritten Kommunikationseinrichtung (15) in Abhängigkeit von der Verarbeitung (app) zugeordneten ergänzenden Daten (dc), deren Bereitstellung die dritte Kommunikationseinrichtung erfordert, und von den Fähigkeiten (cp) der einen oder mehreren zweiten Kommunikationseinrichtungen (11...14) umfasst.

4. Verfahren zur Verwaltung der Bereitstellung von Diensten nach dem vorhergehenden Anspruch, **dadurch gekennzeichnet, dass** das Verfahren zur Verwaltung der Bereitstellung von Diensten die Bereitstellung der angeforderten Verarbeitung auslöst (TTRT), wenn das Verfahren zur Verwaltung der Bereitstellung von Diensten von der ersten Kommunikationseinrichtung (10) Einrichtungsdaten empfängt, die an die erste Kommunikationseinrichtung (10) durch eine dritte Kommunikationseinrichtung (15) übertragen wurden, die für das lokale Netz (1) bei einer Ermittlung von Einrichtungen (MNTR) bereitgestellt wird, die von der ersten Kommunikationseinrichtung (10) durchgeführt wird.

5. Programm, welches Programmcodeanweisungen zur Ausführung der Schritte des Verfahrens zur Verwaltung der Bereitstellung von Diensten nach einem der Ansprüche 1 bis 4, wenn das Programm von einem Prozessor ausgeführt wird, umfasst.

6. Vorrichtung zur Verwaltung der Bereitstellung von Diensten eines Dienstbereitstellungsservers (31), an eine erste Kommunikationseinrichtung (10) von Verarbeitungen (app), die an eine oder mehrere zweite Kommunikationseinrichtungen (11...14) angepasst sind, die zu demselben lokalen Netz (1) wie die erste Kommunikationseinrichtung (10) gehören, wobei die eine oder mehreren zweiten Kommunikationseinrichtungen (11...14) von der ersten Kommunikationseinrichtung (10) verschieden sind, **dadurch gekennzeichnet, dass** die Vorrichtung zur Verwaltung der Bereitstellung von Diensten aufweist:
• eine Eingangsschnittstelle (310) für Daten von Einrichtungen, die sich auf wenigstens eine der zweiten Einrichtungen (11...14) beziehen, wobei die Daten von Einrichtungen (e_dcl) durch die erste Einrichtung (10) an den Dienstbereitstellungsserver (31) im Anschluss an eine Ermittlung (MNTR) von Kommunikationseinrichtungen des lokalen Netzes (1) übertragen werden, die eine oder mehrere zweite Kommunikationseinrichtungen (11...14) erkennt, die mit dem lokalen Netz (1) verbunden sind, wobei diese Einrichtungsdaten (e_dcl) Daten umfassen, die durch die erste Kommunikationseinrichtung (10) von den ein oder mehreren zweiten Kommunikationseinrichtungen (11...14) während der Ermittlung (MNTR) empfangen werden, und
• Mittel zur Extraktion (311), während einer Verbindung (cnx_req) der ersten Kommunikationseinrichtung (10) mit dem Dienstbereitstellungsserver (31), aus mehreren Verarbeitungen (app), die auf dem Dienstbereitstellungsserver (31) verfügbar sind, in Abhängigkeit von ergänzenden Daten (dc), die den Verarbeitungen (app) zugeordnet sind, und von den Fähigkeiten (cp) der einen oder mehreren zweiten Kommunikationseinrichtungen (11...14), wobei die Fähigkeiten (cp) aus den Einrichtungsdaten stammen, wobei die extrahierten Verarbeitungen (app) dafür ausgelegt sind, durch die erste Kommunikationseinrichtung (10) ausgewählt zu werden, im Anschluss an diese Auswahl durch den Dienstbereitstellungsserver (31) an die wenigstens eine der einen oder mehreren zweiten Kommunikationseinrichtungen (11...14) geliefert zu werden und von der wenigstens einen der einen oder mehreren zweiten Kommunikationseinrichtungen (11...14) durchgeführt zu werden.

7. Verfahren zur Deklaration einer Verarbeitung an einem Dienstbereitstellungsserver (31), **dadurch gekennzeichnet, dass** das Verfahren zur Deklaration von Verarbeitungen eine Bereitstellung (DCL_TRT) einer Verarbeitung (app) und von ergänzenden Daten (dc), die den Verarbeitungen (app) zugeordnet sind, umfasst, wobei die registrierten ergänzenden Daten (dc) ausgelegt sind, während einer Verbindung (cnx_req) einer ersten Kommunikationseinrichtung (10) mit dem Dienstbereitstellungsserver (31), für eine Extraktion (xtrc) durch den Dienstbereitstellungsserver (31) aus mehreren Verarbeitungen (app), die auf dem Dienstbereitstellungsserver (31) verfügbar sind, in Abhängigkeit von den ergänzenden Daten (dc) und von Fähigkeiten (cp) einer oder mehrerer zweiter Kommunikationseinrichtungen (11...14), die zu demselben lokalen Netz (1) wie die erste Kommunikationseinrichtung (10) gehören, wobei die Fähigkeiten (cp) aus Einrichtungsdaten stammen, die durch die erste Einrichtung an den Dienstbereitstellungsserver (31) im Anschluss an eine Ermittlung (MNTR) von Kommunikationseinrichtungen des lokalen Netzes (1) übertragen werden, die eine oder mehrere zweite Kommunikationseinrichtungen (11...14) erkennt, die mit dem lokalen Netz (1) verbunden sind, wobei diese Einrichtungsdaten Daten umfassen, die durch die erste Kommunikationseinrichtung (10) von den ein oder mehreren zweiten Kommunikationseinrichtungen (11...14) während der Ermittlung (MNTR) empfangen werden, wobei die eine oder mehreren zweiten Kommunikationseinrichtungen (11...14) von der ersten Kommunikationseinrichtung verschieden sind, wobei die extrahierten Verarbeitungen (app) dafür ausgelegt sind, durch die erste Kommunikationseinrichtung (10) ausgewählt zu werden, im Anschluss an diese Auswahl durch den Dienstbereitstellungsserver (31) an die wenigstens eine der einen oder mehreren zweiten Kommunikationseinrichtungen geliefert zu werden und von der wenigstens einen der einen oder mehreren zweiten Kommunikationseinrichtungen (11...14) durchgeführt zu werden.

8. Programm, welches Programmcodeanweisungen zur Ausführung der Schritte des Verfahrens zur Deklaration von Verarbeitungen (app) nach Anspruch 7, wenn das Programm von einem Prozessor ausgeführt wird, umfasst.

9. Vorrichtung zur Deklaration einer Verarbeitung (35) an einem Dienstbereitstellungsserver (31), **dadurch gekennzeichnet, dass** die Vorrichtung zur Deklaration von Verarbeitungen Mittel zur Bereitstellung einer Verarbeitung und von ergänzenden Daten (dc), die den Verarbeitungen (app) zugeordnet sind, umfasst, wobei die registrierten ergänzenden Daten (dc) ausgelegt sind, während einer Verbindung (cnx_req) einer ersten Kommunikationseinrichtung (10) mit dem Dienstbereitstellungsserver (31), für eine Extraktion (xtrc) durch den Dienstbereitstellungsserver (31) aus mehreren Verarbeitungen (app), die auf dem Dienstbereitstellungsserver (31) verfügbar sind, in Abhängigkeit von den ergänzenden Daten (dc) und von Fähigkeiten (cp) einer oder mehrerer zweiter Kommunikationseinrichtungen (11...14), die zu demselben lokalen Netz (1) wie die erste Kommunikationseinrichtung (10) gehören, wobei die Fähigkeiten (cp) aus Einrichtungsdaten stammen, die durch die erste Einrichtung an den Dienstbereitstellungsserver (31) im Anschluss an eine Ermittlung (MNTR) von Kommunikationseinrichtungen des lokalen Netzes (1) übertragen werden, die eine oder mehrere zweite Kommunikationseinrichtungen (11...14) erkennt, die mit dem lokalen Netz (1) verbunden sind, wobei diese Einrichtungsdaten Daten umfassen, die durch die erste Kommunikationseinrichtung (10) von den ein oder mehreren zweiten Kommunikationseinrichtungen (11...14) während der Ermittlung (MNTR) empfangen werden, wobei die eine oder mehreren zweiten Kommunikationseinrichtungen (11...14) von der ersten Kommunikationseinrichtung (10) verschieden sind, wobei die extrahierten Verarbeitungen (app) dafür ausgelegt sind, durch die erste Kommunikationseinrichtung (10) ausgewählt zu werden, im Anschluss an diese Auswahl durch den Dienstbereitstellungsserver (31) an die wenigstens eine der einen oder mehreren zweiten Kommunikationseinrichtungen geliefert zu werden und von der wenigstens einen der einen oder mehreren zweiten Kommunikationseinrichtungen (11...14) durchgeführt zu werden.

10. Verfahren zur Deklaration von Einrichtungen durch eine erste Kommunikationseinrichtung (10) an einem Dienstbereitstellungsserver (31), **dadurch gekennzeichnet, dass** das Verfahren zur Deklaration von Einrichtungen umfasst:
• eine Übertragung (CDL) von Einrichtungsdaten (e_dcl), die wenigstens eine zweite Kommunikationseinrichtung betreffen, die zu demselben lokalen Netz (1) wie die erste Kommunikationseinrichtung (10) gehört, wobei die zweite Kommunikationseinrichtung von der ersten Kommunikationseinrichtung (10) verschieden ist, wobei die Einrichtungsdaten ausgelegt sind, während einer Verbindung (cnx_req) der Kommunikationseinrichtung mit dem Dienstbereitstellungsserver (31), für eine Extraktion (xtrc) durch den Dienstbereitstellungsserver (31) aus mehreren Verarbeitungen (app), die auf dem Dienstbereitstellungsserver (31) verfügbar sind, in Abhängigkeit von ergänzenden Daten (dc), die den Verarbeitungen (app) zugeordnet sind, und von Fähigkeiten (cp) einer oder mehrerer Kommunikationseinrichtungen, die zu demselben lokalen Netz (1) wie die Kommunikationseinrichtung gehören, wobei die Fähigkeiten (cp) aus den Einrichtungsdaten stammen, wobei die extrahierten Verarbeitungen (app) dafür ausgelegt sind, durch die erste Kommunikationseinrichtung (10) ausgewählt zu werden, im Anschluss an diese Auswahl durch den Dienstbereitstellungsserver (31) an die wenigstens eine der einen oder mehreren zweiten Kommunikationseinrichtungen geliefert zu werden und von der wenigstens einen der einen oder mehreren zweiten Kommunikationseinrichtungen (11...14) durchgeführt zu werden, und
• eine Ermittlung (MNTR) von Kommunikationseinrichtungen des lokalen Netzes (1), die eine oder mehrere zweite Kommunikationseinrichtungen (11...14) erkennt, die mit dem lokalen Netz (1) verbunden sind, wobei diese Einrichtungsdaten Daten umfassen, die durch die erste Kommunikationseinrichtung (10) von den ein oder mehreren zweiten Kommunikationseinrichtungen (11...14) während der Ermittlung (MNTR) empfangen werden.

11. Verfahren zur Deklaration von Einrichtungen nach Anspruch 10, **dadurch gekennzeichnet, dass** das Verfahren zur Deklaration von Einrichtungen eine Registrierung der Einrichtungsdaten in der ersten Kommunikationseinrichtung (10) mit einer Zeitmarke umfasst.

12. Programm, welches Programmcodeanweisungen zur Ausführung der Schritte des Verfahrens zur Deklaration von Einrichtungen nach einem der Ansprüche 10 bis 11, wenn das Programm von einem Prozessor ausgeführt wird, umfasst.

13. Vorrichtung zur Deklaration von Einrichtungen (104) durch eine Kommunikationseinrichtung (10) an einem Dienstbereitstellungsserver (31), **dadurch gekennzeichnet, dass** die Vorrichtung zur Deklaration von Einrichtungen Mittel zur Übertragung von Einrichtungsdaten (101) aufweist, die wenigstens eine zweite Kommunikationseinrichtung (11...14) betreffen, die zu demselben lokalen Netz (1) wie die erste Kommunikationseinrichtung (10) gehört, wobei diese Einrichtungsdaten Daten umfassen, die durch die erste Kommunikationseinrichtung (10) von den ein oder mehreren zweiten Kommunikationseinrichtungen (11...14) während einer Ermittlung (MNTR) von Kommunikationseinrichtungen (11...14) des lokalen Netzes (1) empfangen werden, die eine oder mehrere zweite Kommunikationseinrichtungen (11...14) erkennt, die mit dem lokalen Netz (1) verbunden sind, wobei die Einrichtungsdaten ausgelegt sind, während einer Verbindung (cnx_req) der ersten Kommunikationseinrichtung (10) mit dem Dienstbereitstellungsserver (31), für eine Extraktion (xtrc) durch den Dienstbereitstellungsserver (31) aus mehreren Verarbeitungen (app), die auf dem Dienstbereitstellungsserver (31) verfügbar sind, in Abhängigkeit von ergänzenden Daten (dc), die den Verarbeitungen (app) zugeordnet sind, und von Fähigkeiten (cp) einer oder mehrerer zweiter Kommunikationseinrichtungen (11...14), die zu demselben lokalen Netz (1) wie die Kommunikationseinrichtung (10) gehören, wobei die zweite Kommunikationseinrichtung von der ersten Kommunikationseinrichtung (10) verschieden ist, wobei die Fähigkeiten (cp) aus den Einrichtungsdaten stammen, wobei die extrahierten Verarbeitungen (app) dafür ausgelegt sind, durch die erste Kommunikationseinrichtung (10) ausgewählt zu werden, im Anschluss an diese Auswahl durch den Dienstbereitstellungsserver (31) an die wenigstens eine der einen oder mehreren zweiten Kommunikationseinrichtungen geliefert zu werden und von der wenigstens einen der einen oder mehreren zweiten Kommunikationseinrichtungen (11...14) durchgeführt zu werden.

14. Erste Kommunikationseinrichtung (10), welche aufweist:
• Mittel zur Ermittlung (103) von Kommunikationseinrichtungen (11...14) des lokalen Netzes (1), die eine oder mehrere zweite Kommunikationseinrichtungen (11...14) erkennen, die mit dem lokalen Netz (1) verbunden sind, wobei die Einrichtungsdaten (e_dcl) Daten umfassen, die durch die erste Kommunikationseinrichtung (10) von den ein oder mehreren zweiten Kommunikationseinrichtungen (11...14) während der Ermittlung (MNTR) empfangen werden, und
• eine Vorrichtung zur Deklaration von Einrichtungen (104) durch die erste Kommunikationseinrichtung (10) an einem Dienstbereitstellungsserver (31), wobei die Vorrichtung zur Deklaration von Einrichtungen Mittel zur Übertragung von Einrichtungsdaten aufweist, die wenigstens eine zweite Kommunikationseinrichtung betreffen, die zu demselben lokalen Netz (1) wie die erste Kommunikationseinrichtung (10) gehört, wobei die zweite Kommunikationseinrichtung von der ersten Kommunikationseinrichtung (10) verschieden ist, wobei die Einrichtungsdaten ausgelegt sind, während einer Verbindung (cnx_req) der ersten Kommunikationseinrichtung (10) mit dem Dienstbereitstellungsserver (31), für eine Extraktion (xtrc) durch den Dienstbereitstellungsserver (31) aus mehreren Verarbeitungen (app), die auf dem Dienstbereitstellungsserver (31) verfügbar sind, in Abhängigkeit von ergänzenden Daten (dc), die den Verarbeitungen (app) zugeordnet sind, und von Fähigkeiten (cp) einer oder mehrerer zweiter Kommunikationseinrichtungen (11...14), die zu demselben lokalen Netz (1) wie die erste Kommunikationseinrichtung (10) gehören, wobei die Fähigkeiten (cp) aus den Einrichtungsdaten stammen, wobei die extrahierten Verarbeitungen (app) dafür ausgelegt sind, durch die erste Kommunikationseinrichtung (10) ausgewählt zu werden, im Anschluss an diese Auswahl durch den Dienstbereitstellungsserver (31) an die wenigstens eine der einen oder mehreren zweiten Kommunikationseinrichtungen geliefert zu werden und von der wenigstens einen der einen oder mehreren zweiten Kommunikationseinrichtungen (11...14) durchgeführt zu werden.

## Claims

1. Method for managing provision of services by a server for providing services (31) to a first communication equipment (10) of processes (app) adapted to one or more second communication equipments (11...14) belonging to the same local network (1) as said first communication equipment (10), said one or more second communication equipments (11...14) being distinct from said first communication equipment (10), **characterized in that** the managing method comprises, upon connection (cnx_req) of said first communication equipment (10) to said server for providing services (31):
• a reception of equipment data (e_dcl) relating to at least one of the second equipments, the equipment data being transmitted by the first equipment to the server for providing services (31) subsequent to a discovery (MNTR) of communication equipments of said local network (1) detecting one or more second communication equipments (11...14) connected to said local network (1), said equipment data comprise said data received by said first communication equipment (10) from said one or more second communication equipments (11...14) upon said discovery (MNTR), and
• an extraction (xtrc) from among several processes (app) available on said server for providing services (31) as a function of complementary data (dc) associated with said processes (app) and of the capabilities (cp) of said one or more second communication equipments (11...14), the capabilities (cp) arising from the equipment data, the processes (app) extracted being adapted to be:
- selected by said first communication equipment (10),
- subsequent to this selection, delivered by said server for providing services (31) to said at least one of said one or more second communication equipments
- and implemented by said at least one of said one or more second communication equipments.

2. Method for managing provision of services according to the preceding claim, **characterized in that** said method for managing provision of services comprises an analysis of equipment data (e_nlys) providing said capabilities (cp) of said one or more second communication equipments (11...14) as a function of said equipment data transmitted by said first communication equipment (10) to said server for providing services (31).

3. Method for managing provision of services according to any one of the preceding claims, **characterized in that** said method for managing provision of services comprises a provision (FE) of at least one third communication equipment (15) as a function of complementary data (dc) associated with the process (app) whose said third communication equipment requests a provision and of the capabilities (cp) of said one or more second communication equipments (11...14).

4. Method for managing provision of services according to the preceding claim, **characterized in that** said method for managing provision of services triggers the provision of said process (TTRT) requested when said method for managing provision of services receives from said first communication equipment (10) equipment data transmitted to said first communication equipment (10) by a third communication equipment (15) provided to said local network (1) upon a discovery of equipments (MNTR) which is implemented by said first communication equipment (10).

5. Program comprising program code instructions for the execution of the steps of the method for managing provision of services according to any one of Claims 1 to 4 when said program is executed by a processor.

6. Device for managing provision of services by a server for providing services (31) to a first communication equipment (10) of processes (app) adapted to one or more second communication equipments (11...14) belonging to the same local network (1) as said first communication equipment (10), said one or more second communication equipments (11...14) being distinct from said first communication equipment (10), **characterized in that** the device for managing provision of services comprises:
• an interface for input (310) of equipment data relating to at least one of the second equipments (11...14), the equipment data (e_dcl) being transmitted by the first equipment (10) to the server for providing services (31) subsequent to a discovery (MNTR) of communication equipments of said local network (1) detecting one or more second communication equipments (11...14) connected to said local network (1), said equipment data (e_dcl) comprise said data received by said first communication equipment (10) from said one or more second communication equipments (11...14) upon said discovery (MNTR), and
• means for extraction (311), upon connection (cnx_req) of said first communication equipment (10) to said server for providing services (31), from among several processes (app) available on said server for providing services (31) as a function of complementary data (dc) associated with said processes (app) and capabilities (cp) of said one or more second communication equipments (11...14), the capabilities (cp) arising from the equipment data, the processes (app) extracted being adapted to be selected by said first communication equipment (10), subsequent to this selection, delivered by said server for providing services (31) to said at least one of said one or more second communication equipments and implemented by said at least one of said one or more second communication equipments (11...14).

7. Method for declaring a process to a server for providing services (31), **characterized in that** the method for declaring processes comprises a provision (DCL_TRT) of a process (app) and of complementary data (dc) associated with said processes (app), the complementary data (dc) recorded being adapted, upon connection (cnx_req) of a first communication equipment (10) to said server for providing services (31), for an extraction (xtrc) by said server for providing services (31) from among several processes (app) available on said server for providing services (31) as a function of said complementary data (dc) and of capabilities (cp) of one or more second communication equipments (11...14) belonging to the same local network (1) as said first communication equipment (10), the capabilities (cp) arising from the equipment data transmitted by the first equipment to the server for providing services (31) subsequent to a discovery (MNTR) of communication equipments of said local network (1) detecting one or more second communication equipments (11...14) connected to said local network (1), said equipment data comprise said data received by said first communication equipment (10) from said one or more second communication equipments (11...14) upon the discovery (MNTR), said one or more second communication equipments (11...14) being distinct from said first communication equipment, the processes (app) extracted being adapted to be selected by said first communication equipment (10), subsequent to this selection, delivered by said server for providing services (31) to said at least one of said one or more second communication equipments and implemented by said at least one of said one or more second communication equipments (11...14).

8. Program comprising program code instructions for the execution of the steps of the method for declaring processes (app) according to Claim 7 when said program is executed by a processor.

9. Device for declaring a process (35) to a server for providing services (31), **characterized in that** the device for declaring processes comprises means for providing a process and complementary data (dc) associated with said processes (app), the complementary data (dc) recorded being adapted, upon connection (cnx_req) of a first communication equipment (10) to said server for providing services (31), for an extraction (xtrc) by said server for providing services (31) from among several processes (app) available on said server for providing services (31) as a function of said complementary data (dc) and of capabilities (cp) of one or more second communication equipments (11...14) belonging to the same local network (1) as said first communication equipment (10), the capabilities (cp) arising from the equipment data transmitted by the first equipment to the server for providing services (31) subsequent to a discovery (MNTR) of communication equipments of said local network (1) detecting one or more second communication equipments (11...14) connected to said local network (1), said equipment data comprise said data received by said first communication equipment (10) from said one or more second communication equipments (11...14) upon the discovery (MNTR), said one or more second communication equipments (11...14) being distinct from said first communication equipment (10), the processes (app) extracted being adapted to be selected by said first communication equipment (10), subsequent to this selection, delivered by said server for providing services (31) to said at least one of said one or more second communication equipments and implemented by said at least one of said one or more second communication equipments (11...14).

10. Method for declaring equipments by a first communication equipment (10) to a server for providing services (31), **characterized in that** the method for declaring equipments comprises:
• a transmission (CDL) of equipment data (e_dcl) relating to at least one second communication equipment belonging to the same local network (1) as said first communication equipment (10), said second communication equipment being distinct from said first communication equipment (10), the equipment data being adapted, upon connection (cnx_req) of said communication equipment to said server for providing services (31), for an extraction (xtrc) by said server for providing services (31) from among several processes (app) available on said server for providing services (31) as a function of complementary data (dc) associated with said processes (app) and of capabilities (cp) of one or more communication equipments belonging to the same local network (1) as said communication equipment, the capabilities (cp) arising from the equipment data, the processes (app) extracted being adapted to be selected by said first communication equipment (10), subsequent to this selection, delivered by said server for providing services (31) to said at least one of said one or more second communication equipments and implemented by said at least one of said one or more second communication equipments (11...14), and
• a discovery (MNTR) of communication equipments of said local network (1) detecting one or more second communication equipments (11...14) connected to said local network (1), said equipment data comprise said data received by said first communication equipment (10) from said one or more second communication equipments (11...14) upon said discovery (MNTR).

11. Method for declaring equipments according to Claim 10, **characterized in that** said method for declaring equipments comprises a recording in said first communication equipment (10) of said equipment data with a temporal marker.

12. Program comprising program code instructions for the execution of the steps of the method for declaring equipments according to either one of Claims 10 and 11 when said program is executed by a processor.

13. Device for declaring equipments (104) by a communication equipment (10) to a server for providing services (31), **characterized in that** the device for declaring equipments comprises means for transmitting equipment data (101) relating to at least one second communication equipment (11...14) belonging to the same local network (1) as said first communication equipment (10), said equipment data comprise data received by said first communication equipment (10) from said one or more second communication equipments (11...14) upon a discovery (MNTR) of communication equipments (11...14) of said local network (1) detecting one or more second communication equipments (11...14) connected to said local network (1), the equipment data being adapted, upon connection (cnx_req) of said first communication equipment (10) to said server for providing services (31), for an extraction (xtrc) by said server for providing services (31) from among several processes (app) available on said server for providing services (31) as a function of complementary data (dc) associated with said processes (app) and of capabilities (cp) of one or more second communication equipments (11...14) belonging to the same local network (1) as said first communication equipment (10), said second communication equipment being distinct from said first communication equipment (10), the capabilities (cp) arising from the equipment data, the processes (app) extracted being adapted to be selected by said first communication equipment (10), subsequent to this selection, delivered by said server for providing services (31) to said at least one of said one or more second communication equipments and implemented by said at least one of said one or more second communication equipments (11...14).

14. First communication equipment (10) comprising:
• means for discovery (103) of communication equipments (11...14) of said local network (1) detecting one or more second communication equipments (11...14) connected to said local network (1), said equipment data (e_dcl) comprise said data received by said first communication equipment (10) from said one or more second communication equipments (11...14) upon said discovery (MNTR), and
• a device for declaring equipments (104) by said first communication equipment (10) to a server for providing services (31), said device for declaring equipments comprising means for transmitting equipment data relating to at least one second communication equipment belonging to the same local network (1) as said first communication equipment (10), said second communication equipment being distinct from said first communication equipment (10), the equipment data being adapted, upon connection (cnx_req) of said first communication equipment (10) to said server for providing services (31), for an extraction (xtrc) by said server for providing services (31) from among several processes (app) available on said server for providing services (31) as a function of complementary data (dc) associated with said processes (app) and of capabilities (cp) of one or more second communication equipments (11...14) belonging to the same local network (1) as said first communication equipment (10), the capabilities (cp) arising from the equipment data, the processes (app) extracted being adapted to be selected by said first communication equipment (10), subsequent to this selection, delivered by said server for providing services (31) to said at least one of said one or more second communication equipments and implemented by said at least one of said one or more second communication equipments (11...14).
